Europäisches Patentamt

European Patent Office

Office européen des brevets

(11) Veröffentlichungsnummer: **0 082 386**
**A1**

(12) **EUROPÄISCHE PATENTANMELDUNG**

(21) Anmeldenummer: **82111237.2**

(22) Anmeldetag: **04.12.82**

(51) Int. Cl.³: **B 25 J 9/00**
**B 25 J 11/00, B 25 J 17/02**
**B 23 Q 1/08**

(30) Priorität: **21.12.81 DE 3150511**

(43) Veröffentlichungstag der Anmeldung:
**29.06.83 Patentblatt 83/26**

(84) Benannte Vertragsstaaten:
**AT BE CH DE FR GB IT LI LU NL SE**

(71) Anmelder: **PRODUTEC Entwicklungs- und**
**Planungsgesellschaft für Produktionssysteme und**
**Automatisierungstechnik mbH**
**Heilbronner Strasse 67**
**D-7000 Stuttgart 1(DE)**

(72) Erfinder: **Fritz, Hans-Ulrich**
**Am Wolfsberg 10**
**D-7000 Stuttgart 70(DE)**

(74) Vertreter: **Patentanwälte Ruff und Beier**
**Neckarstrasse 50**
**D-7000 Stuttgart 1(DE)**

(54) **Antriebselement für ein Handhabungsgerät.**

(57) Eine Antriebseinheit für ein Handhabungsgerät enthält einen aus einem Gehäuse (18) einseitig herausschiebbaren Arm (16) in Form eines Rohres (47), in dessen Innerem ein zweites Rohr (60) drehbar gelagert ist. Ein Antriebsmotor (23) verdreht eine Antriebswelle (24), auf der eine Wälzmutter (51) gelagert ist, die mit dem äußeren Rohr (47) fest verbunden ist. Das innere Ende des inneren Rohres (60) besitzt ein Zahnrad (58), das über eine Ritzel (54) und eine Nutwelle (26) gedreht werden kann. Beide Motoren (23, 24) sind innerhalb des abgeschlossenen Gehäuses (18) angeordnet.

./...

Croydon Printing Company Ltd

FIG. 3

2/4

28. Oktober 1982 Sf/Schö

A 19 898 EP

Anmelderin:    Produtec Entwicklungs- und Planungsgesellschaft
               für Produktionssysteme und Automatisierungs-
               technik mbH
               Heilbronner Straße 67
               7000 Stuttgart 1

Antriebselement für ein
Handhabungsgerät

Die Erfindung betrifft ein Antriebselement für ein Handhabungsgerät mit einem Gehäuse, einem aus diesem herausragenden und diesem gegenüber in seiner Längsrichtung mit
Hilfe eines Antriebsmotors verschiebbaren Arm und ggf.
einer an dessen vorderem Ende um die Armlängsachse drehbar angeordneten Befestigungseinrichtung.

Handhabungsgeräte dieser Art werden für automatische Fertigungen verwendet. Sie sind zu diesem Zweck von einer elektronischen Steuerung her ansteuerbar.

Der Erfindung liegt die Aufgabe zugrunde, ein Antriebselement für ein Handhabungsgerät zu schaffen, das möglichst
klein und platzsparend aufgebaut, einfach und billig herzustellen und möglichst vielseitig zu verwenden ist.

Zur Lösung dieser Aufgabe schlägt die Erfindung ein Antriebselement vor, bei dem der Arm ein drehfest gegenüber dem Gehäuse angordnetes verschiebbares Rohr aufweist, an dessen
innerhalb des Gehäuses angeordneten Ende eine Wälzmutter
befestigt ist, die auf einer in dem Gehäuse drehbar gelagerten, von dem Antriebsmotor antreibbaren Antriebswelle gehaltert ist. Wälzmuttern dieser Art sind bekannt, sie werden
beispielsweise unter der Bezeichnung "R.W.S.-Getriebe" von
der Joachim Uhing KG in Milkendorf/Kiel hergestellt und vertrieben.

Die Verwendung einer derartigen Wälzmutter, die sich gegenüber der glatten, durch sie hindurchgeführten Stange verhält wie eine Mutter gegenüber einer Gewindestange, hat den
Vorteil, daß sie nicht nur billig ist, sondern darüber hinaus
auch spielfrei arbeitet. Zusätzlich enthält sie eine Oberlastsicherung.

Durch die von der Erfindung vorgeschlagenen Maßnahmen wird
gleichzeitig eine Verdrehsicherung des Rohres des Armes bewirkt, da die Antriebswelle in dem Gehäuse gelagert ist und
sich die Wälzmutter längs der Antriebswelle bewegt. Diese
Verdrehsicherung ist für Handhabungsgeräte besonders wichtig,
da ein Torsionsnachfedern des vorderen Endes des Armes verhindert werden muß, da sonst eine genaue Positionierung nur
schwer erreichbar ist.

Die Erfindung schlägt weiterhin vor, daß das Rohr in einer
Öffnung des Gehäuses mit Rollen geführt ist. Diese Rollenlagerung, wozu beispielsweise drei oder vier Rollen verwendet werden können, führt zu einer ruckfreien Bewegung des
Armes und gleichzeitig zu einer Abstützung, die eine Bewegung
quer zur Längsachse des Armes verhindert.

Erfindungsgemäß kann weiter vorgesehen sein, daß das vordere
Ende des Gehäuses eine Verdrehsicherung für das Rohr aufweist.
Dies kann beispielsweise derart geschehen, daß das Rohr einen
eckigen Querschnitt aufweist, wobei die Rollen entsprechend
angeordnet sind. Es ist jedoch auch möglich, was von der Erfindung bevorzugt wird, daß das kreiszylindrische Rohr eine
Rippe aufweist, an der Rollen oder Walzen mit etwa radial
zu dem Rohr verlaufender Drehachse angreifen.

In Weiterbildung kann vorgesehen sein, daß innerhalb des verschiebbaren Rohres ein inneres Rohr drehbar an diesem gelagert ist, dessen inneres Ende mit einer Dreheinrichtung und
dessen äußeres Ende mit der Befestigungseinrichtung versehen
ist. Die Anordnung des inneren Rohres, das zusammen mit dem
äußeren Rohr verschoben wird, dient dazu, am vorderen Ende
des Armes noch eine drehende Bewegung durchführen zu lassen.
Beispielsweise kann an der Befestigungseinrichtung am vorderen Ende ein Greifer befestigt sein. Dadurch, daß auch
für diese Einrichtung ein Rohr verwendet wird, ist es möglich,
durch das Innere des Rohres Versorgungsleitungen oder ähnliches nach vorne zu führen.

Die Anordnung der Dreheinrichtung am inneren Ende hat den
Vorteil, daß die Antriebseinrichtung zur Drehung nicht innerhalb des Armes selbst vorgesehen sein muß, so daß dort der
Platz für die Versorgungseinrichtungen auch genutzt werden
kann. Darüber hinaus kann der Antrieb für die Dreheinrichtung
auch größer gebaut werden, als es das Innere des Rohres zulassen würde.

Erfindungsgemäß kann vorgesehen sein, daß das innenseitige
Ende des inneren Rohres ein getrieblich mit einem Ritzel
verbundenes Zahnrad aufweist, wobei das Ritzel drehfest und verschiebbar auf einer Verstellwelle angeordnet ist. Diese Verstellwelle, die in dem Gehäuse gelagert ist, macht es zusammen mit dem Zahnrad und dem Ritzel möglich, den Verstellmotor zum Verdrehen des Armvorderendes innerhalb des Gehäuses anzuordnen. Er kann dort ortsfest angeordnet sein, so daß keinerlei Beschränkungen bzgl. der Energiezufuhr, der Kühlung usw. zu berücksichtigen sind.

Das Ritzel kann mit Vorteil in einer an dem äußeren Rohr befestigten Halterung drehbar gelagert sein. Dies führt dazu, daß die Verstellwelle zusammen mit dem Ritzel eine weitere Verdrehsicherung für den Arm bildet, so daß zusätzlich die Elastizität des Armes in Torsionsrichtung weiter verringert wird.

Zur drehfesten Verbindung zwischen dem Ritzel und der Verstellwelle kann diese beispielsweise als Vierkantwelle ausgeführt sein. Besonders günstig ist es jedoch, wenn die Verstellwelle eine kreiszylindrische Nutwelle ist, auf der das Ritzel kugelgeführt gelagert ist. Derartige Kugelführungen sind handelsüblich. Sie werden beispielsweise unter der Bezeichnung "STAR-Drehmoment Kugelbuchsen" von der Deutschen Star-Kugelhalter GmbH in Schweinfurt hergestellt und vertrieben. Die Kugelführung besitzt den Vorteil, daß die Verschiebung des Ritzels außerordentlich leicht erfolgen kann, so daß hier keine Reibungskräfte auftreten.

Nach einem weiteren Merkmal der Erfindung können die Antriebswelle und/oder die Verstellwelle durch je einen Servomotor mit einer Feststellbremse antreibbar sein. Servomotoren dienen dazu, eine bestimmte Positionierung schnell anzufahren und die Positionierung durch Nachregeln zu halten. Um ein ständiges Nachregeln zu vermeiden, macht es die Verwendung von Servomotoren mit Feststellbremsen möglich, beim Erreichen einer über einen bestimmten Zeitraum nicht zu verändernden Position den Servomotor auszuschalten und die erreichte
Position durch die Feststellbremse zu halten.

In Weiterbildung kann vorgesehen sein, daß der Drehantrieb
für die Antriebswelle und/oder die Verstellwelle über je
mindestens einen Zahnriemen erfolgt. Die Verwendung von Zahnriemen besitzt den Vorteil, daß der Drehantrieb spielfrei ist.
Dies ist für genaue Positionierungen außerordentlich wichtig.

Ein Antriebselement, wie es von der Erfindung vorgeschlagen
wird, kann in sämtlichen möglichen Stellungen verwendet werden. So kann beispielsweise der Arm waagerecht verfahrbar
sein, es ist jedoch auch möglich, daß er beispielsweise senkrecht verfahrbar ist. Die Erfindung schlägt daher vor, daß
bei mindestens teilweise senkrechter Anordnung des Armes ein
Gewichtsausgleich vorgesehen ist. Dieser macht es möglich,
daß der Antriebsmotor möglichst wenig Gewicht transportieren muß. Besonders güntsig ist es, wenn der Gewichtsausgleich
über eine Spiralfeder erfolgt. Bislang wurden zu diesem Zweck
Gasdruckfedern verwendet, die in dem Zentralrohr angeordnet
waren. Dort nimmt eine Gasdruckfeder allerdings wertvollen
Platz weg, der dann nicht mehr für die Kabelführung, Antriebsmotoren o.dgl. verwendet werden kann. Die Spiralfeder kann
vorzugsweise in einer Kassette angeordnet sein, die in einem
seitlichen Vorsprung des Gehäuses angebracht sein und entweder direkt oder über ein Zugmittel wie Kette, Drahtseil,
Bowdenzug o.dgl. an dem Zentralrohr, einem der daran befestigten Teile, der Wälzmutter o.dgl., angreifen kann oder zur
Richtungsumlenkung vorher im vorderen Teil des Gehäuses einmal umgelenkt werden kann.

Besonders günstig ist es, um ein Arbeiten in rauher Umgebung
zu ermöglichen, daß das Gehäuse allseitig geschlossen ist. In diesem Fall kann eine Verschmutzung der sich bewegenden Teile zum größten Teil vermieden werden. Der vordere Teil des Armes kann beispielsweise in einem Faltenbalg angeordnet sein.

Die Antriebsmotoren für die Antriebswelle und/oder die Verstellwelle können etwa in Verlängerung der Armlängsachse im Gehäuse angeordnet sein. Dies macht es möglich, das gesamte Gehäuse relativ schmal auszugestalten, falls dies aus räumlichen Gründen gewünscht wird.

Es ist jedoch auch möglich, wie von der Erfindung weiterhin vorgeschlagen wird, daß die Antriebsmotoren neben der Armlängsachse angeordnet sind. So kann beispielsweise das Abtriebsende der Elektromotoren in die der Armrichtung entgegengesetzte Richtung zeigen. In diesem Fall würde die Gesamtlänge des Gehäuses praktisch nur durch den Verschiebeweg des Armes bestimmt. In diesem Fall ist das Gehäuse also relativ kurz gebaut.

Da das Antriebselement auch für Handhabungsgeräte mit komplizierten Bewegungsmöglichkeiten verwendbar sein soll, ist es nach den Merkmalen der Erfindung möglich, mehrere Antriebselemente zusammenzufassen. Zu diesem Zweck kann das Gehäuse des Antriebselementes eine Führungsschiene, einen Flansch o.dgl. zur Ankupplung des Antriebselementes an eine Halterung, einen Kippfuß, einem weiteren Antriebselement o.dgl. aufweisen. Die Halterung selbst kann beispielsweise wiederum ortsbeweglich sein, z.B. als Schlitten längs eines Gleises verfahrbar sein. Es ist auch möglich, daß ein ortsfest angeordneter Fuß vorgesehen ist, der das Antriebselement um eine vorgegebene Achse um einen bestimmten Winkelbetrag verkippen kann. Selbstverständlich sind auch Kombinationen dieser Bewegungsmöglichkeiten möglich. Aufgrund des kompakten und vielseitig verwendbaren Aufbaues des von der Erfindung vorgeschlagenen Antriebselementes läßt dieses sich also in
einem Baukastensystem mit anderen oder gleichen Elementem
kombinieren.

Erfindungsgemäß kann vorgesehen sein, daß an der Befestigungseinrichtung am vorderen Ende des Armes eines Dreheinheit mit
einer zu der Armlängsachse unter einem vorzugsweise  rechten
Winkel verlaufenden Drehachse befestigt ist, deren Antriebsmotor im Inneren des Innenrohres angeordnet ist. Diese Dreheinheit kann beispielsweise an ihrer Achse einen Greifer aufweisen, mit dem Schrauben eingedreht werden können. Die Anordnung des Antriebsmotors der Dreheinheit innerhalb des
Innenrohres hat den Vorteil, daß die Dreheinheit selbst sehr
klein und kompakt aufgebaut sein kann, was insbesondere dann
von Vorteil ist, wenn innerhalb von engen Durchbrüchen oder
Gehäuseöffnungen gearbeitet werden kann. Der Antrieb kann
vorzugsweise derart erfolgen, daß mit der Drehachse der Dreheinheit ein Schneckenrad verbunden ist, dessen Schnecke über
zwei Kreuzgelenke mit dem Antriebsmotor verbunden ist. Dies
hat den Vorteil, daß mit Hilfe dieser einzigen Getriebestufe
eine relativ große Untersetzung erreicht wird, was mit Hilfe
von schnellaufenden Elektromotoren ein großes Drehmoment ergibt. Darüber hinaus ist die Größe der Dreheinheit praktisch
nur durch den Durchmesser des Schneckenrades bestimmt, was
ebenfalls wieder dafür sorgt, daß die Dreheinheit selbst kompakt gebaut sein kann.

Für noch komplizierte Bewegungen kann mit der Drehachse
der Dreheinheit eine weitere Dreheinheit verbunden sein, deren Antriebsmotor innerhalb des als Zahnring ausgebildeten
Schneckenrades der ersten Dreheinheit liegt. Selbstverständlich ist auch eine Fortsetzung, d.h. die Anordnung einer
dritten Dreheinheit möglich.

Weitere Merkmale, Einzelheiten und Vorzüge der Erfindung ergeben sich aus den Ansprüchen, der folgenden Beschreibung
bevorzugter Ausführungsformen der Erfindung sowie anhand
der Zeichnung. Hierbei zeigen:

Fig. 1    die Seitenansicht eines stehend aufgebau-
          ten erfindungsgemäß ausgebildeten Antriebs-
          elementes;

Fig. 2    die Seitenansicht eines an einer Decke
          aufgebauten Antriebselementes;

Fig. 3    einen Längsschnitt durch ein Antriebselement;

Fig. 4    eine Seitenansicht eines auf einem Kipp-
          fuß aufgebauten Antriebselementes;

Fig. 5    eine an der Vorderseite des Armes angebrachte drehbare Dreheinheit;

Fig. 6    einen Teilschnitt durch das vordere Armende und eine Dreheinheit;

Fig. 7    die perspektivische Ansicht zweier Dreheinheiten.

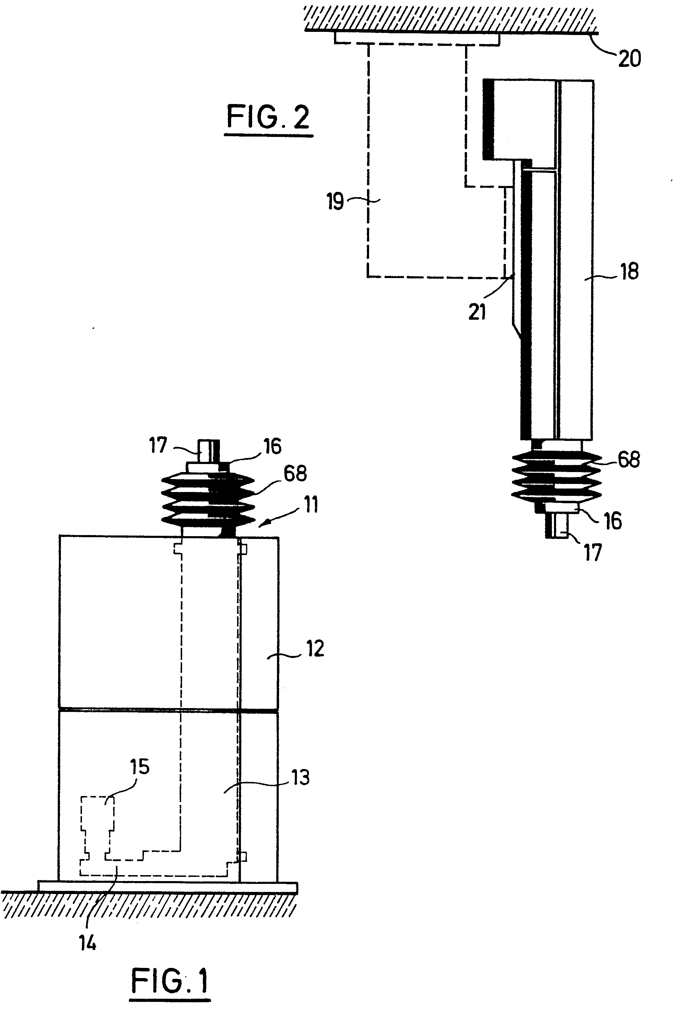

Das in Fig. 1 dargestellte Antriebselement 11 ist in einem
äußeren Gehäuse 12 angeordnet, wobei das eigentliche Antriebselementgehäuse 13 nur gestrichelt dargestellt ist.
Das Gehäuse 13 ist langgestreckt, an seinem in Fig. 1 unteren Ende ist ein seitlicher Ansatz 14 angeordnet, an dem
von oben her der Antriebsmotor 15 angeflanscht ist. Bei dieser Anordnung ist der Platzbedarf für das Antriebselement
11 in Längsrichtung relativ gering. An seinem in Fig. 1
oberen Ende ragt aus dem Gehäuse 13 des Antriebselementes
11 ein Arm 16 heraus, der an seinem oberen Ende einen zylindrischen Ansatz 17 trägt, an dem weitere Gerätschaften oder
Elemente angesetzt werden können. Das vordere Ende des Armes
16 ist gegenüber dem Gehäuse 13 mit Hilfe eines Faltenbalges
68 abgedichtet. In der in Fig. 1 dargestellten Anordnung
kann der Arm 16 nach oben ausgefahren werden.

Bei der Anordnung nach Fig. 2 ist das Gehäuse 18 an einer
nur gestrichelt dargestellten Halterung 19 an einer Decke 20
hängend angeordnet. In diesem Fall ist der Antriebsmotor 15
innerhalb des Gehäuses 18 in dessen oberen Teil angeordnet.
Der Arm 16 befindet sich in diesem Fall an der unteren Seite
des Gehäuses 18 und ist zum Ausfahren nach unten ausgebildet.
An seiner linken Seite besitzt das Gehäuse 18 eine nicht im
einzelnen dargestellte Führungsschiene 21, an der das Gehäuse
18 an der Halterung 19 angeschraubt ist. Es ist zu sehen,
daß das Gehäuse aus insgesamt nur drei Teilen besteht und
eine glatte Oberfläche ohne wesentliche Vorsprünge aufweist.

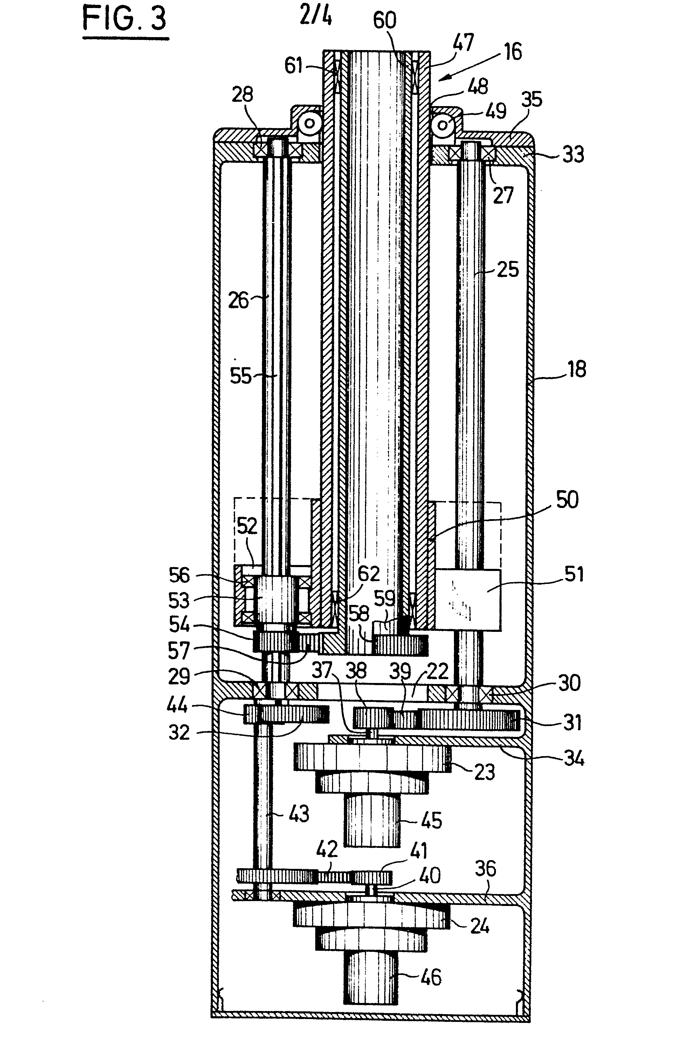

Fig. 3 zeigt nun einen Längsschnitt durch das Gehäuse 18
des Antriebselementes nach Fig. 2. Dabei ist die in Fig. 2
untere Seite nach oben gekehrt, so daß der Arm 16 nach oben
ausfahren kann.

Das Gehäuse besitzt eine innere Trennwand 22, unterhalb
der die beiden Motore 23, 24 angeordnet sind.

Zwischen dem oberen Ende 35 des Gehäuses 18 und der Trennwand 22 erstrecken sich zwei Wellen 25, 26, die mit Lagern
27, 28 in der oberen Außenwand 33 des Gehäuses 18 und mit

A 19 898 EP  - 10 -  **0082386**

Lagern 29, 30 in der Trennwand 22 gelagert sind. Beide Wellen sind über die Trennwand 22 nach unten verlängert und tragen an ihrem jeweils unteren Ende je ein Zahnrad 31, 32.

Das Gehäuse 18 besitzt unterhalb der Trennwand 22 zwei Traversen 34, 36, an denen jeweils ein Motor 23, 24 befestigt ist. An der Welle 37 des Motors 23 sitzt ein Ritzel 38, das über einen Zahnriemen 39 mit dem Zahnrad 31 verbunden ist. Der Motor 23 dient damit zum Drehantrieb der Welle 25.

Der an der zweiten Traverse 36 angeordnete Motor 24 treibt mit einem an seiner Welle 40 angebrachten Ritzel 41 über einen Zahnriemen 42 eine Zwischenwelle 43 an, an deren Ende ein mit dem Zahnrad 32 der Welle 26 kämmendes Zahnrad 44 angeordnet ist. Der Motor 24 dient also zum Drehantrieb der Welle 26.

Beide Motoren 23, 24 besitzen je eine angeflanschte Bremse 45, 46, die dazu dient, bei Betätigung eine Drehung des Motors sicher zu verhindern.

Der Arm 16 weist ein äußeres Rohr 47 auf, das in einer Öffnung 48 im oberen Ende 35 des Gehäuses 18 mit Hilfe von Walzen bzw. Rollen 49 geführt ist. Das Rohr 47 besitzt an seinem in Fig. 3 unteren, d.h. ins Innere des Gehäuses 18 zeigenden Ende eine Halterung 50, an deren rechter Seite eine Wälzmutter 51 befestigt ist. Die Wälzmutter 51 wird von der durch sie hindurchgehenden Antriebswelle 25 gehaltert. Eine Drehung der glatten Antriebswelle 25 führt zu einer Verschiebung der Wälzmutter 51 und damit des Rohres 47 nach oben oder nach unten, je nach Drehrichtung der Antriebswelle 25 und Steigungsrichtung der Wälzmutter 51.

Mit Hilfe des Motors 23 kann daher das Rohr 47 des Armes 16 aus dem Gehäuse hinaus verschoben werden und durch Umkehrung der Drehrichtung wieder in das Gehäuse eingefahren werden. Zur genauen Feststellung der Position des Rohres 47 ist an diesem ein aus Gründen der Vereinfachung nicht dargestelltes lineares Meßsystem vorgesehen.

Die Halterung 50 am unteren Ende des Rohres 47 besitzt eine Lagerung 52 für eine Buchse 53, die an ihrem unteren Ende ein Ritzel 54 trägt. Die Buchse 53 ist auf die Verstellwelle 26 aufgesetzt, so daß die Verstellwelle 26 in Längsrichtung frei verschieblich durch die Buchse 53 und das Ritzel 54 hindurchgeht.

Die Verstellwelle 26 besitzt eine in Längsrichtung verlaufende Nut 55, wobei die Buchse 53 an ihrer Innenseite einen in die Nut 55 eingreifenden Ansatz, Zapfen o.dgl. trägt. Durch diese Verbindung führt also eine Drehung der Verstellwelle 26 zu einer Drehung der Buchse 53 und des Ritzels 54, was durch die Lagerung der Buchse 53 mit Hilfe von Lagern 56 an der Halterung 50 erleichtert wird. In Längsrichtung ist die Buchse 53 frei verschieblich auf der Welle 26 gehaltert.

Das Ritzel 54 ist mit einem Zahnriemen 57 mit einem Zahnrad 58 verbunden, das drehfest am unteren Ende 59 eines zweiten, innerhalb des Rohres 47 drehbar gelagerten Rohres 60 befestigt ist. Die Lagerung des Rohres 60 erfolgt an beiden Enden mit Hilfe von Lagern 61 bzw. 62.

Während also eine Drehung des Antriebsmotors 23 zu einer Längsverschiebung beider Rohre 47, 60 führt, führt eine Drehung des Verstellmotores 24 über die Verstellwelle 26 zu einer Verdrehung des inneren Rohres 60, wobei das äußere
Rohr 47 nicht verdreht wird. Es läßt sich also mit der in Fig. 3
dargestellten Anordnung sowohl ein Ausfahren des Armes 16 aus
dem Gehäuse als auch eine Drehung seines vorderen Endes um
seine Längsachse erreichen, wobei beide Antriebsmotoren abgeschlossen innerhalb des Gehäuses 18 angeordnet sind.

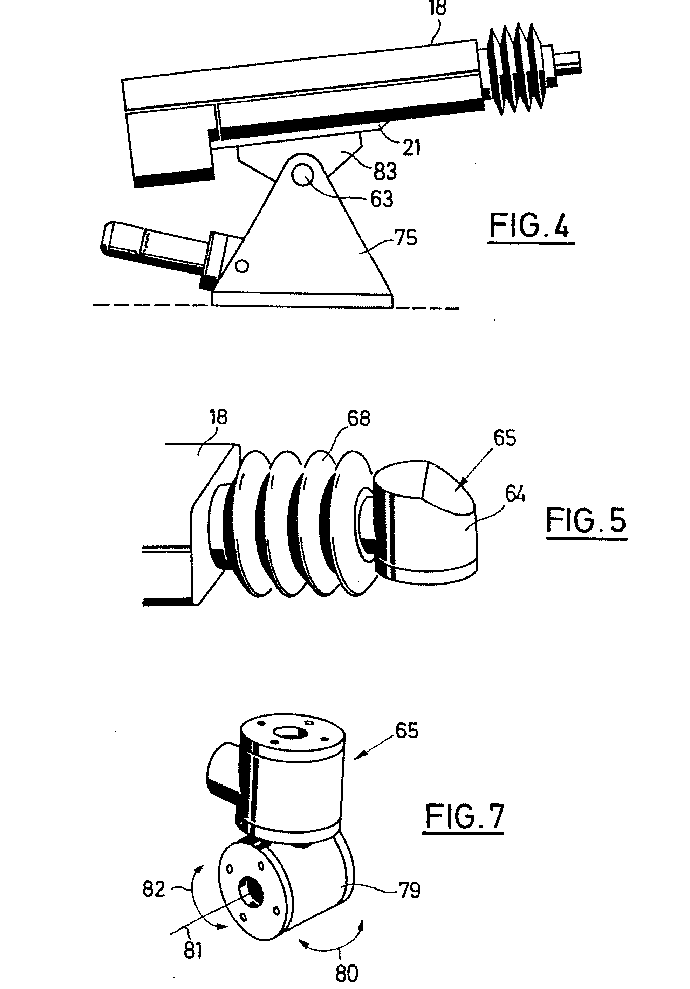

Fig. 4 zeigt eine Anordnung eines Antriebselementes mit einem
Gehäuse 18 wie in Fig. 2 und 3, wobei das Gehäuse 18 mit
seiner Führungsschiene 21 an einem Fuß 75 angelenkt ist,
der mit Hilfe einer nicht dargestellten Einrichtung eine
Verschwenkung des Lagerstückes 83 um die Achse 63 durchführen kann.

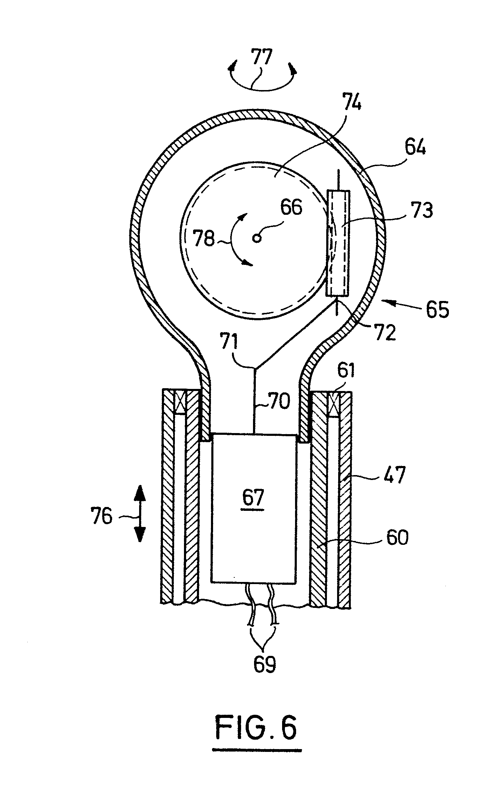

Fig. 5 zeigt eine perspektivische Teilansicht des vorderen
Endes des Armes 16, wobei hier wieder der am vorderen Ende
des Gehäuses 18 angeordnete Faltenbalg 68 zu sehen ist.
Am vorderen Ende des Innenrohres 60 ist das Gehäuse 64
einer Dreheinheit 65 befestigt. Diese Dreheinheit 65 kann
mit Hilfe des Innenrohres 60 um die Armlängsachse gedreht
werden. Die Dreheinheit besitzt, wie aus Fig. 6 zusehen ist,
selbst wieder eine Drehachse 66, die gegenüber der Längsachse des Armes 16 unter einem rechten Winkel verläuft.
Zum Antrieb der Drehachse 66 dient ein im inneren Rohr 60
angeordneter Antriebsmotor 67, dessen Zuleitungsdrähte 69
durch das Innere des Innenrohres 16 in das Gehäuse 18 geführt sind. Die nur schematisch dargestellte Antriebswelle
70 des Antriebsmotors 67 ist über zwei Kreuzgelenke 71, 72
mit einer Schnecke 73 verbunden, die mit einem Schneckenrad 74 in Eingriff steht. Eine Drehung der Antriebswelle 70
des Motors 67 führt also zu einer stark untersetzten Drehung des Schneckenrades 74 und der mit diesem verbundenen
Drehachse 66, so daß durch Betrieb des Motors 67 die Achse
66 gedreht werden kann.

Aus Fig. 6 gehen alle drei Freiheitsgrade des Handhabungsgerätes hervor. Zunächst kann eine Verschiebung in Richtung des Pfeiles 76 erfolgen, dann kann eine Drehung in
Richtung des Doppelpfeiles 77 ausgeführt werden und schließlich eine Drehung in Richtung des Doppelpfeiles 78.

Falls spezielle Anforderungen an die Handhabungseinheit
es erfordern, kann an die vordere Dreheinheit 65, s. Fig. 7,
eine weitere Dreheinheit 79 angeschlossen werden, wobei in
diesem Fall der entsprechende Antriebsmotor 67 der zweiten
Dreheinheit 79 innerhalb des als Zahnring ausgebildeten
Schneckenrades 74 angeordnet ist. Diese zweite Dreheinheit
79 kann durch die erste Dreheinheit 65 in Richtung des Doppelpfeiles 80 verdreht werden, wobei sie selbst eine Drehung
ihrer Drehachse 81 in Richtung des Doppelpfeiles 82 durchführen kann.

Bei der in Fig. 1 dargestellten Anordnung ist es ebenfalls
möglich, ein Gehäuse 18 wie in Fig. 2, 4 und 3 drehbar
anzuordnen, so daß der in Fig. 1 dargestellte seitlich angebrachte Motor 15 zur Drehung des gesamten Gehäuses dienen würde. Das Ausfahren des Armes 16 aus dem Gehäuse 18
bzw. 12 würde dann genauso erfolgen wie bei der Ausführungsform nach Fig. 3 beschrieben. Es würde dann also keine Dreheinheit mehr am Ende des Armes erforderlich sein.

28. Oktober 1982 Sf/Schö

A 19 898 EP

Anmelderin:     Produtec Entwicklungs- und Planungsgesellschaft
                für Produktionssysteme und Automatisierungs-
                technik mbH
                Heilbronner Straße 67

                7000 Stuttgart 1

A n s p r ü c h e
-------

Antriebselement für ein
Handhabungsgerät


1. Antriebselement (11) für ein Handhabungsgerät mit einem
   Gehäuse (13, 18), einem aus diesem herausragenden und
   diesem gegenüber in seiner Längsrichtung mit Hilfe eines
   Antriebsmotors (15, 23) verschiebbaren Arm (16) und ggf.
   einer an dessen vorderem Ende um die Armlängsachse drehbar angeordneten Befestigungseinrichtung, dadurch gekennzeichnet, daß der Arm (16) ein drehfest gegenüber dem
   Gehäuse (18) angeordnetes verschiebbares Rohr (47) aufweist, im Bereich von dessen innerhalb des Gehäuses (18)
   angeordneten Ende eine Wälzmutter (51) befestigt ist,
   durch die eine in dem Gehäuse (18) drehbar gelagerte,
   von dem Antriebsmotor (15, 23) antreibbare Antriebswelle (25) hindurchgreift.

A 19 898 EP                    - 2 -

2. Antriebselement nach Anspruch 1, dadurch gekennzeichnet, daß das Rohr (47) in einer Öffnung (48) des Gehäuses (18) mit Rollen (49) geführt ist und das vordere
   Ende (35) des Gehäuses (18) eine Verdrehsicherung für
   das Rohr (47) aufweist.

3. Antriebselement nach Anspruch 1 oder 2, dadurch gekennzeichnet, daß innerhalb des verschiebbaren Rohres (47)
   ein inneres Rohr (60) drehbar an diesem gelagert ist,
   dessen äußeres Ende mit der Befestigungseinrichtung versehen ist, und dessen inneres Ende eine Dreheinrichtung
   vorzugsweise in Form eines getrieblich mit einem Ritzel (54)
   verbundenen Zahnrad (58) aufweist, wobei das Ritzel (54)
   drehfest und verschiebbar auf einer Verstellwelle (26)
   angeordnet ist.

4. Antriebselement nach Anspruch 3, dadurch gekennzeichnet,
   daß das Ritzel (54) in einer an dem äußeren Rohr (47)
   befestigten Halterung (50) drehbar gelagert ist.

5. Antriebselement nach Anspruch 3 oder 4, dadurch gekennzeichnet, daß die Verstellwelle (26) eine Nutwelle ist,
   auf der das Ritzel (54) kugelgeführt gelagert ist.

6. Antriebselement nach einem der vorhergehenden Ansprüche,
   dadurch gekennzeichnet, daß die Antriebswelle (25) und/
   oder Verstellwelle (26) durch je einen Servomotor (23,
   24) mit einer Feststellbremse (45, 46) antreibbar ist,
   wobei der jeweilige Drehantrieb vorzugsweise über je
   mindestens einen Zahnriemen (39, 42, 57) erfolgt.

7. Antriebselement nach einem der vorhergehenden Ansprüche,
dadurch gekennzeichnet, daß bei senkrecht verschiebbar
angeordnetem Arm (16) ein Gewichtsausgleich, vorzugsweise über eine Spiralfeder, vorgesehen ist.

8. Antriebselement nach einem der vorhergehenden Ansprüche,
dadurch gekennzeichnet, daß das Gehäuse (13, 18) allseitig geschlossen ist.

9. Antriebselement nach einem der vorhergehenden Ansprüche,
dadurch gekennzeichnet, daß die Antriebsmotoren (23,
24) etwa in Verlängerung der Armlängsachse oder neben
der Armlängsache angeordnet sind.

10. Antriebselement nach einem der vorhergehenden Ansprüche,
dadurch gekennzeichnet, daß eine Gehäuseseite eine
Führungsschiene (21), einen Flansch oder dergleichen,
zur Ankupplung des Antriebselementes (11) an einer
Halterung, einem Kippfuß (75), einem weiteren Antriebselement (11) oder dergleichen aufweist.

11. Antriebselement nach einem der vorhergehenden Ansprüche,
dadurch gekennzeichnet, daß an der Befestigungseinrichtung eine Dreheinheit (65, 79) mit einer zur der Armlängsachse unter einem vorzugsweise rechten Winkel verlaufenden Drehachse (66, 81) befestigt ist, deren Antriebsmotor (67) im Inneren des Innenrohres (60) angeordnet ist und über zwei Kreuzgelenke (71, 72) mit einer
Schnecke (73) und einem an der Drehachse (66, 81) angeordneten Schneckenrad (74) verbunden ist.

A 19 898 EP          - 4 -

12. Antriebselement nach Anspruch 11, dadurch gekennzeichnet, daß mit der Drehachse (66, 81) der Dreheinheit (65, 79) eine weitere Dreheinheit (79) verbunden ist, deren Antriebsmotor innerhalb des als Zahnring ausgebildeten Schneckenrades der ersten Dreheinheit (65, 79) liegt.

FIG. 2

FIG. 1

FIG. 3

0082386

3/4

FIG.4

FIG.5

FIG.7

FIG.6

Europäisches
Patentamt

**EUROPÄISCHER RECHERCHENBERICHT**

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int. Cl. ³) |
|---|---|---|---|
| Y | DE-A-2 654 517   (SIEMENS AG)  * Seite  5,  Zeile 20 - Seite 8, Zeile 36; Figuren 1-5 * | 1,3,6, 8,9 | B 25 J   9/00 B 25 J  11/00 B 25 J  17/02 B 23 Q   1/08 |
| Y | DE-B-1 500 334  (BARRY WRIGHT CORP.) * Spalte  1, Zeilen 1-19; Spalte 2, Zeilen 42-65; Figuren 2,4,5 * | 1 | |
| A | DE-A-2 754 609   (INDUSTRIE-WERKE KARLSRUHE AUGSBURG AG) | | |

|  |
|---|
| RECHERCHIERTE SACHGEBIETE (Int. Cl ³) |
| B 25 J B 23 Q F 16 C F 16 H |

Der vorliegende Recherchenbericht wurde für alle Patentansprüche erstellt.

| Recherchenort DEN HAAG | Abschlußdatum der Recherche 07-03-1983 | Prüfer NEHRDICH H.J |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument. das jedoch erst am oder nach dem Anmeldedatum veröffentlicht worden ist
D : in der Anmeldung angeführtes Dokument
L : aus andern Gründen angeführtes Dokument

&  : Mitglied der gleichen Patentfamilie. übereinstimmendes Dokument

EPA Form 1503 03 82